# FASCICULE DE BREVET EUROPEEN

(11) **EP 1 676 481 B1**
(45) Date de publication et mention de la délivrance du brevet: **15.12.2010**
(21) Numéro de dépôt: 05292317.4
(22) Date de dépôt: 02.11.2005
(51) Int. Cl.: A21D 15/00, A23L 1/00, A21C 15/00, A21C 15/02, A21B 2/00

(54) **Sandwich et son procédé de fabrication**
Sandwich und Verfahren zur Herstellung
Sandwich and process for its production

(30) Priorité: 30.12.2004 FR 0414078
(43) Date de publication de la demande: 05.07.2006
(73) Titulaire: LUISSIER, 78220 Viroflay (FR)
(72) Inventeur: Levecque, Pierre, 72530 Yvre L'Eveque (FR)
(74) Mandataire: Bolinches, Michel Jean-Marie

(56) Documents cités:
- GB-A- 2 049 537
- GB-A- 2 288 719
- US-A1- 2003 138 525
- US-A1- 2003 203 077
- US-B1- 6 231 898
- US-B1- 6 397 730

## Description

La présente invention concerne un procédé de fabrication d'un sandwich et un sandwich obtenu par ce procédé.

Différents types de sandwichs comportant deux tranches constituées d'une composition céréalière qui enserrent un produit alimentaire de remplissage ont été développés dans l'industrie agroalimentaire, tels que des sandwichs comportant deux tranches de pain à l'intérieur desquelles est disposée une farce. Afin d'empêcher toute fuite du produit de remplissage hors des tranches sous l'effet de contraintes mécaniques telles que la manipulation et la préhension du sandwich lors de sa fabrication, son réchauffage et/ou sa consommation, on a développé par le passé des procédés pour sceller ensemble des zones périphériques des deux tranches, de sorte que celles-ci enserrent d'une manière étanche le produit de remplissage.

Les documents US-A-3 769 035 et US-A-3 862 344 décrivent tous deux un procédé de scellage d'un sandwich plat comportant deux tranches de pain superposées de part et d'autre d'un produit de remplissage, consistant à enduire ces zones périphériques d'un adhésif à base d'un hydrate de carbone comestible, tel que de l'amidon en poudre ou en solution aqueuse, puis à appliquer un champ électrique alternatif à hautes fréquences de part et d'autre des tranches enserrant le produit de remplissage et l'adhésif, en comprimant localement les zones périphériques des tranches l'une contre l'autre. On obtient ainsi un résidu de colle pâteuse adhérant aux tranches, par chauffage des molécules d'eau présentes dans l'adhésif ou dans les tranches.

Un inconvénient majeur de ce procédé de scellage réside dans son coût de mise en oeuvre relativement élevé, dû en particulier à l'utilisation dudit adhésif et à son activation par un champ électrique.

Le document GB-A-2 049 537 divulgue un procédé de préparation d'un sandwich qui consiste essentiellement à disposer dans une chambre une tranche inférieure de pain sur un moule inférieur en forme de grille, à la surface duquel est formée une matrice de creux carrés reliés entre eux par des saillies. Chaque creux est destiné à recevoir une farce, de sorte qu'après avoir appliqué une tranche supérieure de pain au-dessus du moule et au contact des farces respectivement logées dans les creux, on obtient la matrice de sandwichs scellés, dans lesquels le scellage de chaque sandwich est obtenu sans adhésif en pinçant l'une contre l'autre des zones périphériques des tranches au-dessus des saillies du moule, à la manière d'un sertissage. Ce document indique par ailleurs que l'on peut procéder à une humidification préalable des zones des tranches destinées à être scellées ensemble, avant insertion de la farce, et que l'on peut optionnellement marquer les tranches via des câbles chauffants appliqués sur celles-ci.

Le document US-B-6 397 730 présente un procédé de préparation d'un sandwich qui conduit à un sandwich dans lequel le scellage des tranches est obtenu sans adhésif par pincement (i.e. sertissage) sous l'action de la chaleur de zones périphériques des deux tranches, via un gril recevant ces dernières en position fermée et cuisant ainsi la totalité de l'épaisseur de chaque tranche.

Le document US-B-6 231 898 présente également un sandwich dont les tranches sont scellées ensemble sans adhésif via une pression à froid par sertissage de zones périphériques, et ce document indique que l'on peut optionnellement marquer les tranches par des moyens chauffants appliqués sur celles-ci.

Un but de la présente invention est de remédier à cet inconvénient, et ce but est atteint en ce que la Demanderesse vient de découvrir d'une manière surprenante que si :
a) on soumet à une cuisson superficielle une face seulement de l'une ou chacune des deux tranches qui sont destinées à la fabrication d'un sandwich et qui sont à base d'une composition céréalière, puis si
b) on humidifie la ou chaque tranche ayant été cuite superficiellement en au moins une zone périphérique de son autre face non cuite se trouvant à une température comprise entre 20 et 50° C, puis si
c) on dispose au moins un produit de remplissage pour le sandwich entre les tranches obtenues en b), de telle manière que la ou chaque face cuite superficiellement et la ou chaque face humidifiée soient respectivement tournées vers l'extérieur et vers l'intérieur du sandwich, puis si
d) on presse ces tranches l'une contre l'autre,
   alors on obtient un sandwich qui définit une paroi fermée enserrant d'une manière étanche le ou chaque produit de remplissage et qui présente une croûte externe définie par la face cuite en a) de ladite ou chaque tranche.

Cette humidification de la face non cuite mais encore tiède qui est mise en oeuvre à l'étape b) permet d'obtenir un sandwich scellé d'une manière étanche sans utiliser le moindre adhésif naturel ou de synthèse pour faire adhérer les tranches l'une à l'autre, ce scellage s'opposant à toute fuite ultérieure du produit de remplissage hors des bords périphériques des tranches.

Ainsi, le sandwich selon l'invention définit une interface de scellage entre lesdites tranches qui est dépourvue de tout adhésif usuellement présent à cette interface, tel que de l'amidon modifié, un liant protéique, une maltodextrine pré-gélifiée, un sirop de glucose ou une solution de saccharose, à titre non limitatif. Il en résulte une minimisation de la prolifération bactérienne à l'intérieur du sandwich, laquelle est souvent imputable aux adhésifs ou colles alimentaires utilisés pour son scellage.

Par composition céréalière utilisable pour constituer lesdites tranches, on entendra dans la présente description toute composition à base d'au moins une farine de céréale, pouvant être par exemple toute composition de pain brioché ou de pain de mie.

Selon un exemple avantageux de réalisation de l'invention, cette composition céréalière est de type pain de mie complet et, encore plus avantageusement, de type pain de mie à base de farine complète de froment.

On notera toutefois que ladite composition céréalière pourrait être celle de tout autre pain connu à base d'une autre ou d'autres céréale(s), par exemple un pain de seigle ou un pain multi-céréales, et qu'elle pourrait inclure des brisures de noix, de noisettes et/ou de tous types de graines, par exemple des graines de sésame, d'avoine, de maïs ou de moutarde, à titre exemplatif et nullement limitatif.

Par produit alimentaire de remplissage utilisable dans le sandwich selon l'invention, on entendra dans la présente description toute garniture alimentaire salée ou sucrée de type farce telle que, à titre non limitatif, un produit fromager ou un produit de charcuterie tel qu'une farce mêlant des ingrédients carnés et/ou non carnés.

Selon une autre caractéristique de l'invention, on met en oeuvre ladite cuisson superficielle de l'étape a) précitée en soumettant à un rayonnement infrarouge, dans un four infrarouge de type tunnel à infrarouge électrique, l'une des faces de la ou chaque tranche. Au moyen de ce rayonnement, on obtient un effet grillé en surface pour ladite ou chaque tranche et un transfert thermique conduisant à l'obtention d'une température comprise entre 20 et 50° C pour la face non cuite, en fonction du temps de séjour des tranches évoluant sur des convoyeurs à l'intérieur du four infrarouge.

Selon une autre caractéristique avantageuse de l'invention, on met en oeuvre l'étape b) par ajout d'eau à l'état liquide à une température comprise entre 1 et 30° C. Cet ajout d'eau liquide peut être réalisé, à titre non limitatif, par enduction de ladite face non cuite par exemple au moyen d'un pinceau, ou bien par pulvérisation d'eau au moyen d'une buse.

De préférence, on met en oeuvre l'étape b) en incorporant à la totalité de ladite ou chaque face à humidifier au moins 1 g d'eau par dm² et, à titre encore plus préférentiel, au moins 1,5 g d'eau par dm².

On notera que l'humidification mise en oeuvre en b) concerne au moins une zone périphérique de ladite face non cuite relative à la ou chaque tranche, et qu'elle peut être mise en oeuvre sur la totalité ou non de la face non cuite.

Selon une autre caractéristique de l'invention, l'étape c) précitée est mise en oeuvre de telle manière que ledit ou chaque produit de remplissage soit disposé vers l'intérieur des bords périphériques respectifs des tranches, pour réaliser le scellage de ces dernières entre elles via l'humidification qui est appliquée au moins auxdites zones périphériques.

Selon une autre caractéristique avantageuse de l'invention, on met en oeuvre l'étape d) précitée à froid, à une température avantageusement comprise entre 4 et 20° C. De préférence, on exerce alors sur tout ou partie de la face externe de l'une desdites tranches une pression comprise entre 30 et 40 kg/cm² pendant une durée comprise entre 1 et 5 secondes. On notera toutefois que cette étape d) pourrait être mise en oeuvre à chaud sans sortir du cadre de l'invention, par exemple à une température comprise entre 150 et 200° C et pendant une durée de 3 minutes.

On utilise pour cette étape d) une presse par exemple commandée par des vérins comportant une forme et une contre-forme qui sont destinées à être rapportées l'une sur l'autre et dont les géométries respectives sont conçues pour former la surface externe du sandwich, avantageusement de forme arrondie rappelant celle d'un oeuf aplati ou d'un ellipsoïde de révolution.

En effet, la Demanderesse a mis en évidence que l'humidification de la face non cuite mais encore tiède qui est mise en oeuvre à l'étape b) permet, d'une manière inattendue, d'obtenir un sandwich présentant une forme arrondie relativement stable dans le temps qui est délimitée par ladite croûte externe, grâce à un effet de synergie entre la température de la ou chaque face interne non cuite et son humidification ayant pour effet de conférer une souplesse améliorée à cette face interne humidifiée.

Selon un mode préférentiel de réalisation de l'invention, on cuit et humidifie chacune des tranches aux étapes a) et b), respectivement, de telle sorte que ladite croûte externe présente à l'issue de l'étape d) une surface arrondie continûment convexe en chacune desdites tranches (i.e. des deux côtés de ladite interface) qui est par exemple sensiblement en forme d'oeuf aplati ou d'ellipsoïde de révolution, dont un plan médian de symétrie est matérialisé par l'interface de scellage entre les tranches.

On notera également que la presse utilisée dans ce procédé selon l'invention peut permettre de générer la forme finale du sandwich par découpe, par exemple en fonctionnant à la manière d'un emporte-pièce ou bien par tout autre moyen de découpe connu en lui-même.

On notera en outre que ce procédé selon l'invention permet avantageusement de se passer de sertissage ou pincement de la zone périphérique de l'une desdites tranches contre celle de l'autre tranche pour le scellage du sandwich, ce qui permet d'obtenir un sandwich dont la surface externe de l'une au moins des tranches est continûment convexe, i.e. sans discontinuité représentative d'un tel sertissage.

Un sandwich selon la présente invention comporte deux tranches à base de ladite composition céréalière et présentant chacune deux faces, et au moins ledit produit alimentaire de remplissage enserré par les tranches, ce sandwich définissant une paroi fermée qui enserre d'une manière étanche ledit produit de remplissage via une interface de scellage entre les tranches, et ce sandwich est obtenu par un procédé tel que défini ci-dessus.

Selon l'invention, ce sandwich est dépourvu d'adhésif à ladite interface et il présente une surface externe formant une croûte continûment convexe d'un côté au moins de ladite interface et, avantageusement, des deux côtés de ladite interface (dans ce dernier cas, cette surface continûment convexe délimitant extérieurement le sandwich est par exemple sensiblement en forme d'ellipsoïde de révolution).

Selon une autre caractéristique de l'invention, ledit sandwich est tel que l'une ou chacune des tranches présentant ladite croûte est humidifiée en au moins une zone périphérique de sa face interne non cuite et, préférentiellement, chaque tranche présente ladite croûte sur sa face externe et est humidifiée sur sa face interne, de telle sorte que ladite interface soit exclusivement constituée de ladite composition céréalière humidifiée (i.e. à l'exclusion de tout adhésif, notamment).

Selon une variante de réalisation de l'invention, ledit sandwich comprend en outre entre lesdites tranches un agent bactériostatique, tel qu'un sel par exemple constitué d'ascorbate de sodium.

On notera qu'un sandwich selon la présente invention peut être soumis à une opération complémentaire de réchauffage avant consommation, notamment en vue de réchauffer le produit de remplissage, tel qu'une farce alimentaire, et que la face externe de l'une ou de chaque tranche peut être par exemple grillée avant consommation à la poêle, au grille-pain à la manière d'un croque-monsieur, au four ou encore par tous autres moyens et/ou composants dont peut disposer le consommateur final, voire colorée.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique éclatée illustrant en coupe transversale les éléments constitutifs essentiels pour la mise en oeuvre du procédé de fabrication d'un sandwich selon l'invention,
la figure 2 est une vue schématique en coupe transversale illustrant l'étape de mise sous presse d'un sandwich formé à partir des éléments de la figure 1,
la figure 3 est vue schématique en coupe du sandwich obtenu à l'issue de la mise sous presse de la figure 2, et
la figure 4 est une vue schématique en coupe transversale d'un sandwich obtenu selon une variante de réalisation de la figure 3.

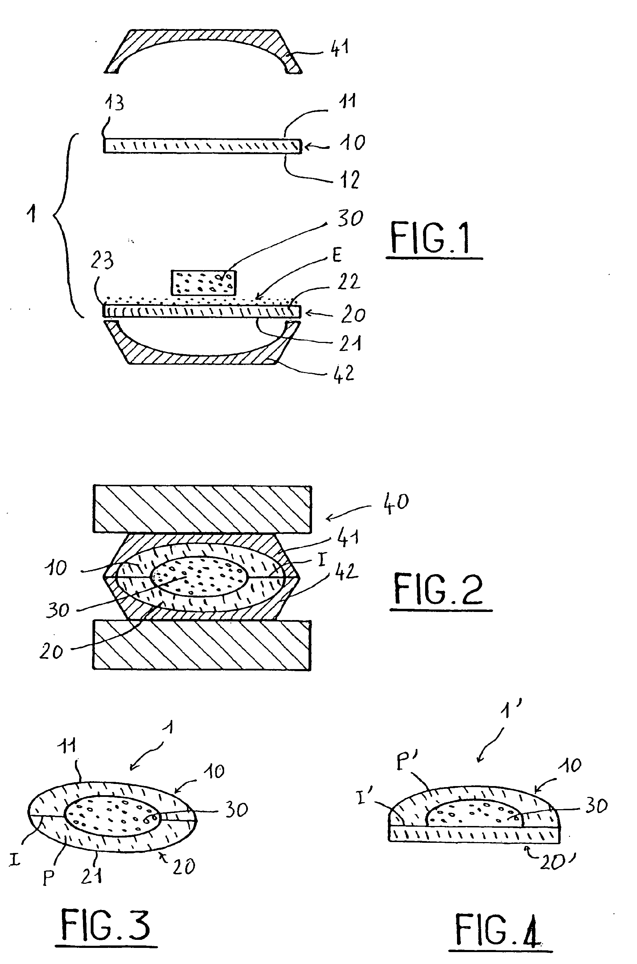

Le sandwich 1 illustré en vue éclatée à la figure 1 comporte deux tranches 10 et 20 prétranchées ou non qui sont à base d'une composition céréalière et qui présentent chacune deux faces 11, 12 et 21, 22. Ces dernières sont respectivement destinées à former des faces externes 11, 21 et internes 12, 22 du sandwich 1. Le sandwich comporte en outre un produit alimentaire de remplissage 30 prédécoupé ou non qui est destiné à être enserré d'une manière étanche par ces tranches 10 et 20.

Conformément au procédé de fabrication de ce sandwich 1 selon l'invention, on soumet la face 11 de la tranche 10 et/ou la face 21 de la tranche 20 à une cuisson superficielle, selon que l'on souhaite obtenir un sandwich 1 présentant une croûte externe sur sa tranche 10 et/ou sur sa tranche 20. On met avantageusement en oeuvre cette cuisson dans un tunnel de dorage électrique à rayonnement infrarouge moyen (non représenté à la figure 1) pourvu de convoyeurs adaptés pour recevoir les tranches 10 et 20 pendant un temps de séjour prédéterminé en vue de leur cuisson superficielle.

Immédiatement après cette cuisson superficielle de la tranche 10 et/ou 20, on humidifie celle(s)-ci en au moins une zone périphérique de son autre face 12 et/ou 22 non cuite qui se trouve à une température comprise entre 20 et 50° C, par un ajout d'eau E à l'état liquide (illustré schématiquement à la figure 1 sous forme de gouttelettes recouvrant la totalité de la face 22 de la tranche 20).

On dispose ensuite le produit de remplissage 30 entre les tranches 10 et 20 et vers l'intérieur des bords périphériques respectifs 13 et 23 de ces dernières, de telle manière que la ou chaque face cuite superficiellement 11, 21 et la ou chaque face humidifiée 12, 22 soient respectivement tournées vers l'extérieur et vers l'intérieur du sandwich 1.

Puis, en référence aux figures 1 et 2, on presse les tranches 10 et 20 l'une contre l'autre au moyen d'une presse 40 pourvue d'une forme 41 et d'une contre-forme 42 identique qui, dans cet exemple de réalisation, présentent des géométries concaves délimitant entre elles une surface fermée sensiblement en forme d'ellipsoïde de révolution lorsqu'elles sont appliquées l'une contre l'autre pour définir une interface de scellage 1 du sandwich 1.

Le sandwich 1 ainsi obtenu, illustré à la figure 3, définit une paroi fermée P enserrant d'une manière étanche le produit de remplissage 30. Ce sandwich 1 présente une croûte externe continûment convexe qui est définie par les faces cuites superficiellement 11, 21 des tranches 10 et 20 et qui présente une surface continûment convexe sensiblement en forme d'ellipsoïde de révolution. Par conséquent, ce sandwich définit une paroi fermée étanche P continûment convexe qui s'étend des deux côtés de l'interface de scellage 1.

On a fabriqué des sandwichs 1 selon la présente invention en mettant en oeuvre le procédé de fabrication précité, en référence aux figures 1 à 3. Les tranches 10 et 20 de ces sandwichs 1 étaient constituées d'une composition céréalière de type pain de mie complet commercialisé par la société JACQUET sous la dénomination « SPECIAL SANDWICH COMPLET » à base de farine complète de froment (selon un taux de 61 %). Ces tranches 10 et 20 présentaient une forme de carré de 115 mm de côté.

Quant au produit de remplissage 30 pour chaque sandwich 1, il était par exemple constitué d'une farce froide sous la forme d'un boudin ovoïde prédécoupé de rillettes.

On a soumis dans le four précité à infrarouge de type tunnel les faces respectives 11 et 21 des tranches 10 et 20 à une cuisson superficielle, pour obtenir un sandwich 1 présentant une croûte externe à la fois sur ses tranches 10 et 20. Immédiatement après cette cuisson superficielle des tranches 10 et 20, on a humidifié celles-ci sur la totalité de leurs autres faces 12 et 22 non cuites qui se trouvaient à une température d'environ 40° C, en les enduisant d'eau liquide à une température de 15° C. Plus précisément, on a enduit chaque face 12, 22 des tranches 10 et 20 de 2 g d'eau, soit un peu plus de 1,5 g d'eau par dm² de tranche 10 ou 20.

Puis on a pressé à froid (à une température d'environ 10° C) les tranches 10 et 20 l'une contre l'autre pendant environ 1 seconde et en exerçant une pression d'environ 35 kg/cm², au moyen de la presse 40 pourvue de la forme 41 et de la contre-forme 42, comme décrit ci-dessus en référence à la figure 2.

On a ainsi obtenu un sandwich 1 selon l'invention qui présente une croûte sur la totalité de sa surface externe, laquelle est dans cet exemple de réalisation de forme arrondie (sensiblement en forme d'ellipsoïde de révolution), et qui est caractérisé par un scellage des tranches 10 et 20 sans adhésif. Ce scellage permet d'enserrer d'une manière étanche le produit de remplissage 30 en s'opposant efficacement à la fuite de ce dernier, sous l'effet des diverses contraintes mécaniques auxquels le sandwich 1 peut être soumis, notamment lors de son conditionnement, de son stockage, de son transport, de son réchauffage et de sa consommation. L'expérience a montré que ce sandwich 1 selon l'invention conserve sa géométrie arrondie pendant au moins un mois.

A la figure 4 est illustré un sandwich 1' selon une variante de réalisation de l'invention, qui se différencie uniquement du sandwich 1 de la figure 3 en ce que l'une de ses tranches 20' de géométrie plate a été scellée à la tranche 10 à croûte externe continûment convexe en utilisant une presse pourvue d'une forme identique à la forme 41 de la figure 2 mais une contre-forme plate (i.e. dépourvue de concavité contrairement à la contre-forme 42). On a ainsi obtenu un sandwich 1' sensiblement en forme de demi-ellipsoïde de révolution, qui définit par conséquent une paroi fermée étanche P' continûment convexe d'un côté seulement de l'interface de scellage 1'. A l'instar du sandwich 1, ce sandwich 1' est caractérisé par un scellage efficace des tranches 10 et 20' sans adhésif et par une stabilité de sa géométrie partiellement arrondie pendant au moins un mois.

On notera toutefois qu'un sandwich obtenu par le procédé selon l'invention pourrait également présenter une forme sphérique ou ovale, une forme parallélépipédique à faces carrées ou rectangulaires, ou bien sensiblement une forme de triangle ou de losange.

## Revendications

1. Procédé de fabrication d'un sandwich (1, 1') comportant deux tranches (10 et 20, 10 et 20') qui sont à base d'une composition céréalière et qui présentent chacune deux faces (11, 12 et 21, 22), et au moins un produit alimentaire de remplissage (30) enserré par lesdites tranches, **caractérisé en ce qu'**il comprend les étapes successives suivantes :
a) on soumet à une cuisson superficielle l'une desdites faces (11, 21) de l'une ou chacune desdites tranches,
b) on humidifie ladite ou chaque tranche cuite superficiellement en au moins une zone périphérique de son autre face non cuite (12, 22) se trouvant à une température comprise entre 20 et 50° C,
c) on dispose ledit ou chaque produit de remplissage entre lesdites tranches, de telle manière que ladite ou chaque face cuite superficiellement (11, 21) et ladite ou chaque face humidifiée (12, 22) soient respectivement tournées vers l'extérieur et vers l'intérieur dudit sandwich, puis
d) on presse lesdites tranches l'une contre l'autre, de telle sorte que ledit sandwich définisse une paroi fermée (P, P') enserrant d'une manière étanche ledit ou chaque produit de remplissage et présente une croûte externe définie par la face cuite (11, 21) de ladite ou chaque tranche.

2. Procédé selon la revendication 1, **caractérisé en ce que** ladite croûte externe présente une surface continûment convexe en l'une au moins desdites tranches (10, 20), telle qu'une surface sensiblement en forme d'ellipsoïde de révolution.

3. Procédé selon la revendication 1 ou 2, **caractérisé en ce que** l'on met en oeuvre l'étape a) en soumettant l'une desdites faces (11, 21) de ladite ou chaque tranche (10, 20, 20') à un rayonnement infrarouge dans un four, par exemple dans un tunnel de dorage à infrarouge moyen.

4. Procédé selon une des revendications précédentes, **caractérisé en ce que** l'on met en oeuvre l'étape b) par ajout d'eau (E) à l'état liquide à une température comprise entre 1 et 30° C.

5. Procédé selon une des revendications précédentes, **caractérisé en ce que** l'on met en oeuvre l'étape b) en incorporant à la totalité de ladite ou chaque face (12, 22) à humidifier au moins 1 g d'eau par dm².

6. Procédé selon une des revendications précédentes, **caractérisé en ce que** l'on cuit et humidifie chacune desdites tranches (10, 20, 20') aux étapes a) et b), respectivement.

7. Procédé selon une des revendications précédentes, **caractérisé en ce que** l'on met en oeuvre l'étape d) dans une presse (40) à une température comprise entre 4 et 20° C.

8. Procédé selon une des revendications précédentes, **caractérisé en ce que** lesdites tranches (10, 20, 20') sont constituées d'un pain de mie complet, tel qu'un pain de mie à base de farine complète de froment.

9. Procédé selon une des revendications précédentes, **caractérisé en ce que** ledit sandwich (1, 1') définit une interface de scellage (I, I') entre lesdites tranches (10 et 20, 10 et 20') qui est dépourvue d'adhésif.

10. Sandwich (1, 1') obtenu par un procédé selon une des revendications précédentes, comportant deux tranches (10 et 20, 10 et 20') qui sont à base d'une composition céréalière et qui présentent chacune deux faces (11, 12 et 21, 22), et au moins un produit alimentaire de remplissage (30) enserré par lesdites tranches, ledit sandwich définissant une paroi fermée (P, P') qui enserre d'une manière étanche ledit produit de remplissage via une interface de scellage (I, I') entre lesdites tranches, **caractérisé en ce que** ledit sandwich est dépourvu d'adhésif à ladite interface et présente une surface externe formant une croûte continûment convexe d'un côté au moins de ladite interface, l'une ou chacune desdites tranches (10 et 20, 10 et 20') présentant ladite croûte ayant sa face externe qui est cuite superficiellement et sa face interne qui est non cuite et humidifiée.

11. Sandwich (1) selon la revendication 10, **caractérisé en ce que** ladite surface externe forme ladite croûte continûment convexe des deux côtés de ladite interface (I).

12. Sandwich (1) selon la revendication 11, **caractérisé en ce qu'**il présente sensiblement une géométrie d'ellipsoïde de révolution.

13. sandwich (1, 1') selon une des revendications 10 à 12, **caractérisé en ce que** ladite interface (I, I') est constituée de ladite composition céréalière humidifiée.

14. Sandwich (1, 1') selon une des revendications 10 à 13, **caractérisé en ce qu'**il comprend entre lesdites tranches (10 et 20, 10 et 20') un agent bactériostatique, tel qu'un ascorbate de sodium.

15. Sandwich (1, 1') selon une des revendications 10 à 14, **caractérisé en ce que** lesdites tranches (10 et 20, 10 et 20') sont constituées d'un pain de mie complet, tel qu'un pain de mie à base de farine complète de froment.

## Claims

1. Process for making a sandwich (1, 1') comprising two slices (10 and 20, 10 and 20'), which are based on a cereal composition and which each have two faces (11, 12 and 21, 22), and at least one food-product filling (30) enclosed by the said slices, **characterised in that** it comprises the following successive steps:
a) one of the said faces (11, 21) of one or each of the said slices is cooked on the surface,
b) the said or each slice that is cooked on the surface is moistened in at least one peripheral zone of its other non-cooked face (12, 22) being at a temperature between 20 and 50° C,
c) the said or each filling product is arranged between the said slices in such a manner that the said or each face (11, 21) that is cooked on the surface and the said or each face (12, 22) that is moistened are turned towards the exterior and towards the interior of the said sandwich respectively, then
d) the said slices are pressed one against the other in such a way that the said sandwich defines a closed wall (P, P') enclosing in a tight manner the said or each product filling and has an external crust defined by the cooked face (11, 21) of the said or each slice.

2. Process according to claim 1, **characterised in that** the said external crust has a continuously convex surface in at least one of the said slices (10, 20), such as a surface substantially in the form of an ellipsoid of revolution.

3. Process according to claim 1 or 2, **characterised in that** step a) is implemented by subjecting one of the said faces (11, 21) of the said or each slice (10, 20, 20') to infrared radiation in an oven, for example in a mid-infrared browning tunnel.

4. Process according to one of the preceding claims, **characterised in that** step b) is implemented by adding water (E) in the liquid state at a temperature between 1 and 30° C.

5. Process according to one of the preceding claims, **characterised in that** step b) is implemented by incorporating into the whole of the said or each face (12, 22) to be moistened at least 1 g of water per dm².

6. Process according to one of the preceding claims, **characterised in that** each of the said slices (10, 20, 20') is cooked and moistened in steps a) and b) respectively.

7. Process according to one of the preceding claims, **characterised in that** step d) is implemented in a press (40) at a temperature between 4 and 20° C.

8. Process according to one of the preceding claims, **characterised in that** the said slices (10, 20, 20') are constituted of a wholemeal sandwich bread, such as a sandwich bread based on a wholewheat flour.

9. Process according to one of the preceding claims, **characterised in that** the said sandwich (1, 1') defines a sealing interface (I, I') between the said slices (10 and 20, 10 and 20') without adhesive.

10. Sandwich (1, 1') obtained by means of a process according to one of the preceding claims, comprising two slices (10 and 20, 10 and 20'), which are based on a cereal composition and which each have two faces (11, 12 and 21, 22), and at least one food-product filling (30) enclosed by the said slices, the said sandwich defining a closed wall (P, P') which encloses in a tight manner the said product filling by way of a sealing interface (I, I') between the said slices, **characterised in that** the said sandwich has no adhesive at the said interface and has an external surface forming a continuously convex crust on one side at least of the said interface, the one or each of the said slices (10 and 20, 10 and 20') that present the said crust having its external face which is cooked on the surface and its internal face which is not cooked and is moistened.

11. Sandwich (1) according to claim 10, **characterised in that** the said external surface forms the said continuously convex crust of the two sides of the said interface (I).

12. Sandwich (1) according to claim 11, **characterised in that** it substantially has the geometry of an ellipsoid of revolution.

13. Sandwich (1, 1') according to one of claims 10 to 12, **characterised in that** the said interface (I, I') is constituted of the said moistened cereal composition.

14. Sandwich (1, 1') according to one of claims 10 to 13, **characterised in that** between the said slices (10 and 20, 10 and 20') it includes a bacteriostatic agent, such as a sodium ascorbate.

15. Sandwich (1, 1') according to one of claims 10 to 14, **characterised in that** the said slices (10 and 20, 10 and 20') are constituted of a wholemeal sandwich bread, such as a sandwich bread based on a wholewheat flour.

## Patentansprüche

1. Verfahren zum Herstellen eines Sandwichs (1, 1'), das zwei Scheiben (10 und 20, 10 und 20') aufweist, welche auf Basis einer Getreidezusammensetzung beruhen, und die jeweils zwei Seiten (11, 12 und 21, 22) aufweisen und wenigstens ein von den Scheiben umschlossenes Lebensmittelprodukt einer Füllung (30), **dadurch gekennzeichnet, dass** das Verfahren die nachfolgenden Schritte in dieser Abfolge aufweist:
a) eine der Seiten (11, 21) von einer oder jeder der Scheiben wird einem oberflächlichen Backen unterzogen,
b) eine oder jede oberflächlich gebackene Scheibe wird in wenigstens einem Umfangsbereich ihrer anderen, nicht gebackenen Seite (12, 22), die sich bei einer Temperatur zwischen 20 und 50°C befindet, befeuchtet,
c) das oder jedes Produkt der Füllung wird zwischen den Scheiben angeordnet, so dass die oder jede oberflächlich gebackene Seite (11, 21) und die oder jede befeuchtete Seite (12, 22) zum Äußeren beziehungsweise zum Inneren des Sandwichs gedreht ist, dann
d) werden die Scheiben gegeneinander gedrückt, so dass das Sandwich eine geschlossene Wand (P, P') definiert, die das oder jedes Produkt der Füllung dicht einschließt und eine äußere Kruste aufweist, die von der gebackenen Seite (11, 21) der oder jeder Scheibe definiert wird.

2. Verfahren nach Anspruch 1, **dadurch gekennzeichnet, dass** die äußere Kruste eine durchgängig konvexe Oberfläche bei wenigstens einer der Scheiben (10 ,20) aufweist, wie eine Oberfläche, die im Wesentlichen die Form eines Drehellipsoids aufweist.

3. Verfahren nach Ahnspruch 1 oder 2, **dadurch gekennzeichnet, dass** Schritt a) durchgeführt wird, indem eine der Seiten (11, 21) der oder jeder Scheibe (10, 20, 20') einer Infrarotstrahlung in einem Ofen, zum Beispiel in einem Tunnelofen zum Überziehen mit einem Infrarot-Mittel, unterzogen wird.

4. Verfahren nach einem der vorhergehenden Ansprüche, **dadurch gekennzeichnet, dass** Schritt b) durchgeführt wird, indem Wasser (E) in flüssigem Zustand mit einer Temperatur zwischen 1 und 30°C zugegeben wird.

5. Verfahren nach einem der vorhergehenden Ansprüche, **dadurch gekennzeichnet, dass** Schritt b) durchgeführt wird, indem in der Gesamtheit der oder jeder zu befeuchtenden Seite (12, 22) wenigstens 1 g Wasser pro dm² eingeschlossen wird.

6. Verfahren nach einem der vorhergehenden Ansprüche, **dadurch gekennzeichnet, dass** jede der Scheiben (10, 20, 20') in den Schritten a) beziehungsweise b) gebacken und befeuchtet wird.

7. Verfahren nach einem der vorhergehenden Ansprüche, **dadurch gekennzeichnet, dass** Schritt d) in einer Presse (40) bei einer Temperatur zwischen 4 und 20°C durchgeführt wird.

8. Verfahren nach einem der vorhergehenden Ansprüche, **dadurch gekennzeichnet, dass** die Scheiben (10, 20, 20') aus Vollkorn-Toastbrot bestehen, wie Toastbrot auf Basis von Vollkornweizenmehl.

9. Verfahren nach einem der vorhergehenden Ansprüche, **dadurch gekennzeichnet, dass** das Sandwich (1, 1') eine Verbindungsstelle der Abdichtung (I, I') ohne Haftmittel zwischen den Scheiben (10 und 20, 10 und 20') definiert.

10. Sandwich (1, 1') erhältlich durch ein Verfahren nach einem der vorhergehenden Ansprüche, umfassend zwei Scheiben, (10 und 20, 10 und 20'), welche auf Basis einer Getreidezusammensetzung beruhen, und die jeweils zwei Seiten (11, 12 und 21, 22) aufweisen und wenigstens ein von den Scheiben umschlossenes Lebensmittelprodukt einer Füllung (30), wobei das Sandwich eine geschlossene Wand (P, P') definiert, die das Produkt der Füllung über eine Verbindungsstelle der Abdichtung (I, I') zwischen den Scheiben dicht einschließt, **dadurch gekennzeichnet, dass** das Sandwich kein Haftmittel an der Verbindungsstelle aufweist und eine äußere Oberfläche besitzt, die eine durchgängig konvexe Kruste von wenigstens einer Seite der Verbindungsstelle bildet, wobei eine oder jede der Scheiben (10 und 20, 10 und 20') die Kruste als ihre äußere Oberfläche aufweist, die oberflächlich gebacken ist, und eine innere Seite, die nicht gebacken und befeuchtet ist.

11. Sandwich (1) nach Anspruch 10, **dadurch gekennzeichnet, dass** die äußere Oberfläche die durchgängig konvexe Kruste von beiden Seiten der Verbindungsstelle (I) bildet.

12. Sandwich (1) nach Anspruch 11, **dadurch gekennzeichnet, dass** es im Wesentlichen die Geometrie eines Drehellipsoids aufweist.

13. Sandwich (1, 1') nach einem der Ansprüche 10 bis 12, **dadurch gekennzeichnet, dass** die Verbindungsstelle (I, I') aus der befeuchteten Getreidezusammensetzung besteht.

14. Sandwich (1, 1') nach einem der Ansprüche 10 bis 13, **dadurch gekennzeichnet, dass** es zwischen den Scheiben (10 und 20, 10 und 20') ein baktertiostatisches Mittel, wie Natriumascorbat, umfasst.

15. Sandwich (1, 1') nach einem der Ansprüche 10 bis 14, **dadurch gekennzeichnet, dass** die Scheiben (10 und 20, 10 und 20') aus Vollkorn-Toastbrot bestehen, wie einem Toastbrot auf Basis von Vollkornweizenmehl.
